# EUROPÄISCHE PATENTSCHRIFT

(11) **EP 2 417 414 B1**
(45) Veröffentlichungstag und Bekanntmachung des Hinweises auf die Patenterteilung: **20.03.2013**
(21) Anmeldenummer: 10713631.9
(22) Anmeldetag: 09.04.2010
(51) Int. Cl.: F28F 1/04, F28F 1/22, F28F 13/00, F28F 21/06

(54) **WÄRMEÜBERTRAGER UND TEMPERIERUNGSVORRICHTUNG**
HEAT EXCHANGER AND TEMPERATURE-CONTROL DEVICE
ÉCHANGEUR DE CHALEUR ET DISPOSITIF DE THERMORÉGULATION

(30) Priorität: 09.04.2009 DE 102009017200
(43) Veröffentlichungstag der Anmeldung: 15.02.2012
(73) Patentinhaber: Feichtinger, Reinhard, 91785 Pleinfeld-Ramsberg (DE); Amesöder, Simon, 91710 Gunzenhausen (DE)
(72) Erfinder: Feichtinger, Reinhard, 91785 Pleinfeld-Ramsberg (DE); Amesöder, Simon, 91710 Gunzenhausen (DE)
(74) Vertreter: Richardt Patentanwälte GbR
(86) Internationale Anmeldenummer: PCT/EP2010/054700
(87) Internationale Veröffentlichungsnummer: WO 2010/115979

(56) Entgegenhaltungen:
- EP-A1- 0 979 981
- AU-A- 8 839 091
- DE-A1-102005 029 051
- JP-A- 2007 255 728

## Beschreibung

Die Erfindung betrifft einen Kunststoff wärmeüber Trager nach dem Oberbegriff des Anspruchs 1. So ein Wärmeübertrager ist aus EP 0 979 981 A1 bekannt. Die Erfindung betrifft auch eine Temperierungsvorrichtung, insbesondere für Kühlschränke oder Gebäude oder dgl. mit wenigstens einem Wärmeübertrager.

Aus der DE 18 02 234 ist ein Wärmeübertrager für Kühlschränke bekannt bei dem von einem flüssigen Medium durchflossene Rohre in Form einer Rohrschlange oder ebenen Rohrregisters fest und wärmeleitend mit Wärmeaustauschblechen verbunden ist, zwischen denen Verbindungsstellen geschlitzt sind. Die Blechstreifen sind jeweils abwechselnd nach unterschiedlichen Seiten des Wärmeaustauscherbleches vollständig aus der Ebene des Bleches herausgedrückt.

Aus der DE 10 03 236 C1 ist ein Rohrschlangenverdampfer für Kühlschränke und dgl. bekannt, wobei die ein Verdampfergehäuse auf den Seiten überziehenden Leitungsabschnitte für das Kältemittel jeweils auf der dem Verdampfungsraum zugekehrten Fläche der betreffenden Seitenwand und, bei viereckigen Gehäusequerschnitt, gegebenenfalls auch auf der Innenfläche der Deckenwand des Gehäuses verlegt sind. Der dem Boden des Gehäuses jeweils zugeordnete Leitungsabschnitt verläuft stets auf der dem zu kühlenden Raum zugekehrten Außenfläche desselben.

Ein Wärmeübertrager aus Kunststoff besteht nach der DE 32 46 919 A1 aus dünnewandigen flexiblen Hart-PVC-Rippenrohren. Die Rippenrohre gehen von einem Verteilungsrohr aus und münden entsprechend in ein Sammlerrohr. Die Rippen sind hohl ausgebildet und haben zum Hohlraum des Rohres hin eine offene Verbindung. Eine besondere Ausbildung besteht in Hohlrippen, deren Neigungswinkel zur Rohrachse kleiner als 90° ist. Der Wärmeübertrager dient z.B. im Spitzbogen eines Daches aufgehängt der Schwimmbadbeheizung oder der Brauchwasservorwärmung.

Aus der DE 103 38 318 B4 ist ein Latentwärmespeicher mit einem Wärmaustauscher aus Kunststoff-Metallverbund-Kapillarrohren bekannt, die parallel zueinander in Matten angeordnet und an den Enden jeweils in einem Sammelrohr zusammengefaßt sind. Jedes der Kunststoff-Metallverbund-Kapillarrohre besteht aus einem inneren Kunststoffkapillatrohr mit einem Durchmesser von etwa 1 mm bis 7 mm bei einer Wandstärke von 50 µm bis 1,5 mm, auf das eine vollflächig aufgebrachte Metallfolie von etwa 19 bis 500 µm Dicke als Diffusionsbarriere aufgeklebt und überlappend verklebt ist.

Nachteilig ist bei den vorbekannten Dokumenten, dass der Wärmeaustausch über Rohrleitungen vorgenommen wird. Die Rohre übertragen aufgrund ihres runden Querschnitts die Energie aber nur über eine sehr kleine Berührungskontaktfläche, wodurch sich eine geringe Eniergieübertragungseffizienz ergibt.

Aus EP 0 979 981 A1 ist ein Solarkollektor bekannt, bei dem ein Energieübertragungsmedium zwischen zwei Kunststoffschichten hindurchgeführt wird.

Aus DE 10 2005 029 051 A1 ist eine Wärmeleitvorrichtung für eine Fußboden-, Wand- oder Deckenheizung bekannt, bei der ein Wärmeleitkörperetement aus Grafitexpandat gebildet wird, welches senkrecht zu der flächigen Ausdehnung des Wärmeleitkörperelements eine reduzierte Wärmeleitfähigkeit aufweist.

Aus JP-A-2007255728 ist ein Wärmeübertrager bekannt, bei dem zwischen einem Isolator und zum Beispiel einer Metallschicht eine Wärmeaustauschleltung geführt ist.

Es stellt sich deshalb die Aufgabe, eine Vorrichtung der eingangs genannten Art zum Temperieren und einen Wärmeübertrager selbst so weiter zu entwickeln, dass insbesondere die Eniergieübertragungseffizienz verbessert wird.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Nach Ausführungsformen der Erfindung wird der Kunststoffwärmeübertrager durch ein Wärmeleitkörperelement und ein Wärmeisolierkörperelement gebildet, wobei das Wärmeleitkörperelement eine größere Wärmeleitfähigkeit als das Wärmeisolierkörperelement aufweist. Zwischen dem Wärmeleitkörperelement und dem Wärmeisolierkörperelement ist zumindest ein Energieübertragungskörper zum Durchfluss eines Energleübertragungsmediums ausgebildet.

Beispielsweise handelt es sich bei dem Wärmeleitkörperelement und dem Wärmeisolierkörperelement um zwei Kunststoffteile, insbesondere zwei Formteile aus Kunststoff, die separat zum Beispiel durch Kunststoffspritzguss oder durch Extrusion hergestellt und dann miteinander verbunden werden, um den Kunststoffwärmeübertrager zu bilden. Die Verbindung des Wärmeleitkörperelements und des Wärmeisolierkörperelements kann beispielsweise form- und/oder stoffschlüssig erfolgen, wie zum Beispiel durch Verschweißen. Das Wärmeleitkörperelement und das Wärmeisolierkörperelement können aber auch in einem Arbeitsgang einstückig hergestellt werden, und zwar beispielsweise durch Koextrusion oder ein Mehrkomponentenkunststoffspritzgießverfahren.

Das Wärmeleitkörperelement und das Wärmeisolierkörperelement können an deren Innenseiten so geformt sein; dass sich aufgrund des Zusammenfügens des Wärmeleitkörperelements und des Wärmeisolierkörperelements der oder die Energieübertragungskörper für den Durchfluss des Energieübertragungsmediums bilden; für die Bildung der Energieübertragungskörper innerhalb des Kunststoffwärmetauschers sind dann keine weiteren separaten Komponenten erforderlich.

Nach einer Ausführungsform der Erfindung werden die Energieübertragungskörper durch rohrförmige Hohlelemente z.B. aus Kunststoff gebildet, die in durch die zusammengefügten Wärmeleitkörper und Wärmeisolierkörperelemente gebildeten Kavitäten angeordnet sind. Diese Hohlelemente können aus einem leitenden Kunststoff einer hohen Wärmeleitfähigkeit, die größer als die Wärmeleitfähigkeit des Wärmeisolierkörperelements ist, gebildet werden.

Nach einer weiteren Ausführungsform der Erfindung wird eines der Hohlelemente durch zwei Teilkörperhohlelemente gebildet, von denen eines eine große Wärmeleitfähigkeit und eines eine geringere Wärmeleitfähigkeit aufweist, wobei dasjenige der Teilkörperhohlelemente mit der geringeren Wärmeleitfähigkeit an dem Wärmeisolierkörperelement anliegt.

Nach der Erfindung beinhaltet das Wärmeleitkörperelement einen Kunststoff mit einer anisotropen Wärmeleitfähigkeit. Beispielsweise handelt es sich bei dem Wärmeleitkörperelement um ein Kunststoffspritzgussteil oder ein Kunststoffkoextrusionsteil aus dem anisotrop wärmeleitfähigen Kunststoff. Die Wärmeleitfähigkeit des Kunststoffs hat eine Vorzugsrichtung, in der die Wärmeleitfähigkeit im Vergleich zu anderen Richtungen erhöht ist.

Nach der Erfindung hat der Kunststoffwärmeübertrager zumindest zwei Energieübertragungskörper, die voneinander beabstandet sind und quer zu der Vorzugsrichtung verlaufen. Beispielsweise verlaufen die Energieübertragungskörper parallel zueinander unterhalb einer Frontseite des Wärmeleitkörperelements. Der anisotrop leitfähige Kunststoff hat dann eine Vorzugsrichtung quer, vorzugsweise senkrecht, zu der Längsrichtung der Energieübertragungskörper, das heißt der Durchflussrichtung des Energieübertragungsmediums. Dies hat den Vorteil, dass die Wärme in dem Zwischenraum zwischen zwei benachbarten Energieübertragungskörpern gut geleitet wird, so dass ein größerer Teil, vorzugsweise die gesamte Oberfläche des Wärmeleitkörperelements, effizient für die Wärmeübertragung genutzt wird, und nicht nur die Bereiche in der Nähe der Energieübertragungskörper.

Erfindungsgemäß wird diese Aufgabe bei einer Temperierungsvorrichtung dadurch gelöst,
- dass die Energieübertragungskörper aus ersten Teilkörperhohlelementen aus einem leitenden Kunststoff mit einer Wärmeleitfähigkeit von ca. 1,0 bis 50,0 [W/(mK)] bestehen, an die zweite Teilkörperhohlelemente aus einem Kunststoff mit einer Wärmeleitfähigkeit von ca. 0,001 bis 1,0 [W/(mK)] angeordnet sind,
- dass die ersten Teilkörperhohlelemente von einem Energieleitkörper aus einem weiteren leitenden Kunststoff mit einer Wärmeleitfähigkeit von ca. 1,0 bis 50,0 [W/(mK)] eingefaßt sind, und
- dass an den zweiten Teilkörperhohlelementen ein Wärmeisolierkörperelement aus einem isolierenden Kunststoff mit einer Wärmeleitfähigkeit von ca. 0,001 bis 1,0 [W/(mK)] angeordnet ist.

Die mit der Erfindung erzielten Vorteile bestehen insbesondere darin, dass die Energieübertragungskörper zweiteilig aus Kunststoff geformt werden. Hierdurch können Querschnittsformen realisiert werden, die einen flächigen Kontakt zur Übertragungsseite ermöglichen. Der sich an die leitfähigen Teilkörperhohlelemente anschließende Energieleitkörper verstärkt den Übertragungswirkungsgrad. Das sich an die nichtleitenden Teilkörperhohlelemente anschließende Wärmeisolierkörperelement erhöht hingegen den Isoliereffekt. Hierdurch wird die übertragene Energie gezielter eingesetzt. Der Aufbau eines Kühlschranks wird hierdurch revolutioniert bei gleichzeitiger Senkung der Herstellungskosten.

Unter den Begriff Kühlschrank werden Gefrierfächer und Aufnahmefächer in Kühlschränken und dgl. sowie Gefriertruhen subsumiert.

Der Kunststoffwärmeaustauscher kann modulförmig ausgebildet werden. Hierdurch ist es möglich, eine entsprechende Anzahl von Gruppen von zweiteilig ausgebildeten Energieübertragungskörpern der jeweiligen Körperwand angepaßt zu installieren.

Die Aufgabe wird bei einem Wärmeübertrager dadurch gelöst, dass die Energieübertragungskörper aus ersten Teilkörperhohlelementen aus einem leitenden Kunststoff mit einer Wärmeleitfähigkeit von ca. 1,0 bis 50,0 [W/(mK)] bestehen, an die zweite Teilkörperelemente aus einem Kunststoff mit einer Wärmeleitfähigkeit von ca. 0,001 bis 1,0 [W/(mK)] angeordnet sind.

Die hiermit erzielten Vorteile bestehen insbesondere darin, dass der Aufbau von Kühlschränken, Raumheizungen, Klimaanlagen, Gebäudeversorgungsanlagen eine neue Qualität erhält. Ihr Aufbau wird vereinfacht, der Übertragungswirkungsgrad und der Isoliereffekt verbessern sich.

Der Wärmeübertrager kann zum einen ein Verdampfer für Kühlschränke oder dgl. sein, bei dem ein Kältemittel oder dgl. durch die Energieübertragungskörper fließt. Der Wärmeübertrager kann zum anderen ein Warmeübertragungsträger sein, bei dem eine erwärmte Flüssigkeit gezielt Wärme über einen Energieträger an die Umwelt abgibt. Der Wärmeübertrager kann weiterhin ein Sonnenkollektor sein, bei dem ein Wärmeaustauschmedium, z. B. Wasser oder dgl. durch Sonnenstrahlen erhitzt und so Wärmeenergie aufgenommen wird.

An den zweiten Teilhohlkörperelementen kann ein Wärmeisolierkörperelement aus einem isolierenden Kunststoff mit einer Wärmeleitfähigkeit von ca. 0,001 bis 1,0 [W/(mK)] angeordnet werden.

An die ersten Teilkörperhohlelemente kann wenigstens teilweise ein Energieleitkörper aus einem weiteren leitenden Kunststoff mit einer Wärmeleitfähigkeit von ca. 1,0 bis 50,0 [W/(mK)] angeordnet werden.

Zur weiteren Isolierung kann an dem Wärmeisolierkörperelement ein Isolierkörperelement aus einem weiteren isolierenden Kunststoff mit einer Wärmeleitfähigkeit von ca. 0,001 bis 1,0 [W/(mK)] angeordnet werden.

Die ersten Teilkörperhohlelemente können aber auch aus einem leitenden Kunststoff mit einer Wärmeleitfähigkeit von ca. 2,0 bis 10,0 [W/(mK)] bestehen, die zweiten Teilkörperhohlelemente aus einem Kunststoff mit einer Wärmeleitfähigkeit von ca. 0,1 bis 1,0 [W/(mK)].

Die Energieleitkörper können aus einem leitenden Kunststoff mit einer Wärmeleitfähigkeit aus einem isolierenden Kunststoff mit einer Wärmeleitfähigkeit von ca. 0,0015 bis 0,3 [W/(mK)] hergestellt sein.

Die ersten Teilhohlkörperelementen und der Energieleitkörper können aus einem leitenden Kunststoff mit gleicher Wärmeleitfähigkeit hergestellt werden. Diese Teile werden dadurch nicht nur fertigungstechnisch sondern auch wärmetechnisch eine Einheit.

Auf dem Energieleitkörper, d.h. dem Wärmeleitkörperelement, insbesondere dessen Frontseite, kann ein Plattenelement angeordnet werden. Das Plattenelement kann aus einem ungefüllten oder ungefüllten Kunstststoff, einem Metall, oder einem anderen Werkstoff wie Holz, Fließ, Tapete,...oder dergleichen bestehen. Hierdurch ist ein Mehrschichtverbund möglich.

Nach einer Ausführungsform der Erfindung ist eine Frontseite des Wärmeleitkörperelements großflächig ausgebildet. Insbesondere kann durch das Wärmeleitkörperelement ein zu kühlender oder zu wärmender Raum begrenzt oder umschlossen werden. Dies ist besonders für Anwendungen mit nur freier Konvektion vorteilhaft. Die ersten Teilkörperhohlelemente können im Querschnitt teilrechteckförmig ausgebildet sein. Hierdurch ist durch die glatte Anschlußfläche an den Übertragungsraum, z. B. einen Kühlschrank eine optimale Energieübertragung in Form von Kälte bzw. bei anderen Anwendungen in Form von Wärme gegeben.

Die zweiten Teilhohlkörperelemente können im Querschnitt
- teilrechteckförmig
- teilkreisförmig,
- teilelipsoidförmig,
- dreieckförmig und/oder
- trapezförmig
ausgebildet werden.
Setzen sich die Energieübertragungskörper aus einem teilrechteckförmigen ersten Teilhohlkörperelement und
- einem teilrechteckförmigen zweiten Teilhohlkörperelement zusammen, ergibt sich ein rechteckiger bzw. quadratischer Querschnitt,
- einem teilkreisförmigen zweiten Teilhohlkörperelement zusammen, ergibt sich ein halbrunder bzw. teilrunder Querschnitt,
- einem teilelipsoidförmigen zweiten Teilhohlkörperelement zusammen, ergibt sich ein tunnelförmiger Querschnitt,
- einem dreieckförmigen zweiten Teilhohlkörperelement zusammen, ergibt sich ein hausgiebelförmiger Querschnitt,
- einem trapezförmig zweiten Teilhohlkörperelement zusammen, ergibt sich ein blockförmiger Querschnitt.

Die Querschnittsformen sind auf diese geometrischen Formen nicht allein beschränkt. Welche Querschnittsform zum Einsatz kommt, hängt von dem Verwendungszweck des Wärmaustauschers und den Platzverhältnissen ab.

Für den Aufbau kann eine Vielzahl von Kunststoffen zum Einsatz kommen:

Das Plattenelement kann, wie bereits erwähnt, u. a. aus einem ungefüllten Kunststoff bestehen.

So kann das Plattenelement also aus einem ungefüllten Kunststoff, oder dgl. bestehen. Der Kunststoff kann ein thermoplastischer Kunststoff, insbesondere Polystyrol, ein Polystyrol-Blend, ein Polyolefin, ein Polyester, ein Polyamid, ein bioabbaubarer Kunststoff oder dergleichen sein.

Der isolierende Kunststoff kann ein mit Luft, CO2 oder dgl. Gas geschäumter Kunststoff sein.

Der leitende und der weitere leitende Kunststoff können ein mit Metall-Pulver, Keramik-Pulver, Graphit, Aluminiumoxyd, Bornitrid, Metallfasern und/oder Nanostoffen gefüllter Kunststoff sein.

Das Metall-Pulver kann ein Aluminium-, ein Kupfer- oder dgl. Pulver sein.

Das Keramik-Pulver kann ein BN-, AL2O3-, Silikat- oder dgl. Pulver sein.

Die Aufgabe wird weiterhin bei einem Verfahren zur Herstellung eines Wärmeaustauschers durch eine Verwendung eines Kunststoffverbunds derart gelöst, dass die Energieübertragungskörper aus ersten Teilkörperhohlelementen aus einem leitenden Kunststoff mit einer Wärmeleitfähigkeit von ca. 1,0 bis 50,0 [W/(mK)] geformt werden, an die zweite Teilkörperelemente aus einem Kunststoff mit einer Wärmeleitfähigkeit von ca. 0,001 bis 1,0 [W/(mK)] angeformt werden.

Das Anformen kann vorteilhafter Weise ein Anextrudieren sein.

Die hiermit verbundenen Vorteile bestehen insbesondere darin, dass für die Formung der Energieübertragungskörper ein Werkzeug verwendet wird, das den gewünschten Querschnitt bestimmt. Bei der Extrusion fließen die beiden verwendeten Kunststoffe an der Trennstelle ineinander und bilden einen einheitlichen Verbund, der vor allem mechanischen Belastungen standhalten kann und für eine sichere Dichtheit sorgt.

An die ersten Teilkörperhohlelemente kann ein Energieleiterkörper aus einem weiteren leitenden Kunststoff mit einer Wärmeleitfähigkeit von ca. 1,0 bis 50,0 [W/(mK)] angeformt werden.

Die ersten Teilkörperhohlelemente und der Energieleiterkörper können aus einem leitenden Kunststoff mit einer Wärmeleitfähigkeit geformt werden.

Hierdurch verbessert und vereinheitlicht sich die Gesamtleitfähigkeit. Darüber hinaus vereinfacht sich der Herstellungsvorgang.

Die ersten Teilkörperhohlelemente und der Energieleiterkörper können aus einem gleichen leitenden Kunststoff mit einer im wesentlichen gleichen Wärmeleitfähigkeit geformt werden.

Die ersten Teilkörperhohlelemente, der Energieleiterkörper und ein Plattenelement können als Mehrschichtverbund geformt werden.

Die Erfindung ist in der Zeichnung dargestellt und wird im Folgenden näher beschrieben.

Es zeigen
- Fig. 1: einen Teilquerschnitt eines Kühlschranks mit einem Kunststoffwärmeaustauscher in schematischer Darstellung,
- Fig. 2: eine erste Ausführungsform eines Kunststoffwärmeaustauschers in einem teilweise schematisch dargestellten Schnitt,
- Fig. 3: eine zweite Ausführungsform eines Kunststoffwärmeaustauschers in einem teilweise schematisch dargestellten Schnitt,
- Fig. 4: bis 6 verschiedene Querschnittsformen von Energieübertragungskörpern für Kunststoffwärmeaustauscher gemäß Fig. 1 bis 3,
- Fig. 7: einen Kühlschrank mit Kunststoffwärmeaustauschern gemäß Fig. 1 bis 6,
- Fig. 8: einen Kühlschrank mit Kunststoffwärmeaustauschern gemäß Fig. 1 bis 6 in Modulform,
- Fig. 9: eine Raumklimatisierung mit Kunststoffwärmeaustauschern gemäß Fig. 1 bis 6 in Modulform,
- Fig. 10: eine Deckenheizung mit Kunststoffwärmeaustauschern gemäß Fig. 1 bis 6 in Modulform und
- Fig. 11: eine Hausversorgungsanlage mit Kunststoffwärmeaustauschern gemäß Fig. 1 bis 6 in Modulform.

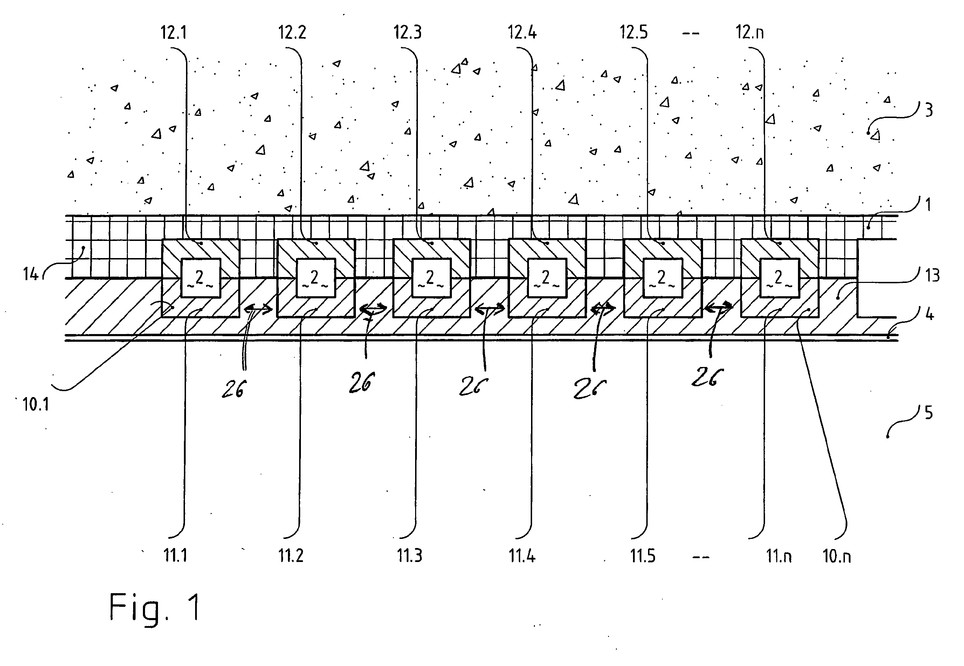

In Fig. 1 ist ein Teilquerschnitt eines Kühlschranks dargestellt. Hier überträgt ein Wärmeübertrager Kälte in einen Kühlschrankinnenraum 5, um eine gewünschte Kühltemperatur ständig zu gewährleisten. Der Kühlschrankinnenraum kann ein Gefrierfach und/oder ein Kühlfach sein.

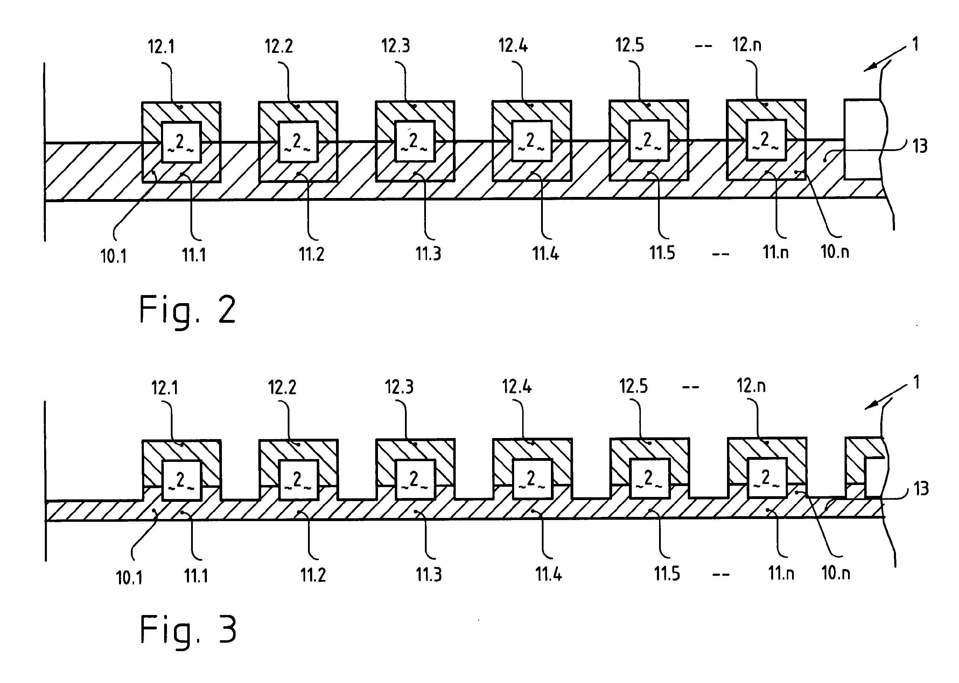

Wie die Fig. 1 und 2 zeigen ist dieser Wärmeübertrager als Kunststoffwärmeaustauscher 1 ausgebildet. Seine Energieübertragungskörper 10.1, ..., 10.n, in denen als Energieübertragungsmedium 2 ein Kältemittel fließt, setzen sich zusammen aus
- Teilkörperhohlelementen 11.1, 11.2, 11.3, 11.4, 11.5, ...., 11.n, die aus einem leitenden Kunststoff mit einer Wärmeleitfähigkeit λ von ca. 1,0 bis 50, vorzugsweise 2,0 bis 10,0 [W/(mK)] bestehen, an die
- Teilkörperhohlelemente 12.1, 12.2, 12.3, 12.4, 12.4, 12.5, ..., 12.n, die aus einem Kunststoff mit einer Wärmeleitfähigkeit Lamda λ von ca. 0,001 bis 1,0, vorzugsweise 0,1 bis 0,3 [W/(mK)] bestehen, angeformt sind.

Die Energieübertragungskörper 10.1, ... können in beliebiger Anzahl neben und/oder übereinander liegen. Ihre Anordnung und ihre Anzahl werden durch die speziellen Energieübertragungsaufgaben bestimmt.

Die Wärmeleitfähigkeit λ wird hier in [W/(mK)] mit
- W Watt
- m Meter
- K Grad Kelvin
gemessen.

Zum Innenraum 5 hin sind die Teilkörperhohlelemente 11.1, ..., 11.n wenigstens teilweise von einem Wärmeleitkörper 13 aus einem leitenden Kunststoff mit einer Wärmeleitfähigkeit λ von ca. 1,0 bis 50, vorzugsweise 2,0 bis 10,0 [W/(mK)] eingefaßt. Der Wärmleitkörper reicht hier etwa bis zur Höhe der leitenden Teilkörperhohlelemente 11.1, ..., 11.n

Alternativ sind bei einem Kunststoffwärmeaustauscher 1 gemäß Fig. 3 die Teilkörperhohlelemente 11.1, ..., 11.n und der Wärmeleitkörper 13 aus dem gleichen leitenden Kunststoff geformt. Die Dicke der Teilkörperhohlelemente 11.1, ... und des Wärmeleitkörpers 13 kann etwa gleich einer Wanddicke der Energieübertragungskörper 10.1, ... sein.

Der leitende Kunststoff kann ein mit einem Metall-Pulver, z. B. Aluminium-Pulver, Graphit, Aluminiumoxyd, Bornitrid, Metallfasern und/oder Nanostoffen gefüllter Kunststoff sein.

Der Kunststoff für die Teilkörperhohlelemente 12.1, ... ist ein ungefüllter Kunststoff, der ein thermoplastischer Kunststoff, insbesondere Polystyrol, ein Polystyrol-Blend, ein Polyolefin, ein Polyester, ein Polyamid, ein bioabbaubarer Kunststoff oder dgl. sein kann.

Bei der Formung der Energieübertragungskörper 10.1, ... bestimmt ein Werkzeug den gewünschten Querschnitt. Bei der Extrusion fließen der leitende und der nicht leitende Kunststoff an der Trennstelle ineinander und bilden so einen einheitlichen Verbund, der vor allem mechanischen Belastungen standhalten kann und dicht ist.

Die Energieübertragungskörper 10.1, ..gemäß Fig. 1 bis Fig. 6 haben einen im Wesentlichen quadratischen Querschnitt. Er kann natürlich auch rechteckig sein.

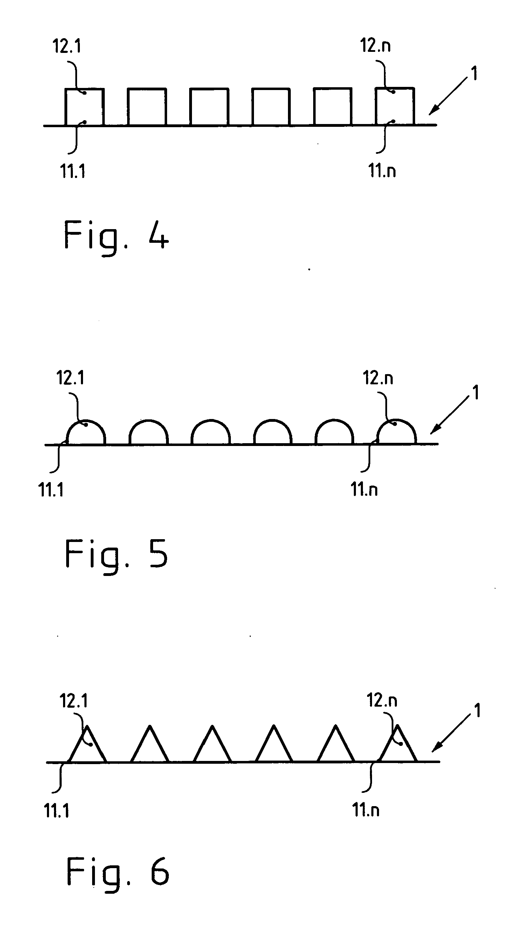

Bestimmt wird der Querschnitt wesentlich teilweise durch den Querschnitt der Teilkörperhohlelemente 12.1, .... Der kann gemäß Fig. 5 Teil- bzw. halbrund und gemäß Fig. 6 dreieckförmig sein.

Wesentlich ist, dass die Teilkörperhohlelemente 11.1, ... mit ihrer geraden Basisfläche für eine bestmögliche Energie-, im Fall eines Kühlschranks Kälteübertragung des Kältemittels 2 sorgen.

An den Wärmeleitkörper 13 schließt sich ein Plattenelement 4 an.

Das Plattenelement 4 kann aus einem Metall oder einem anderen Werkstoff wie Holz, Fließ, Tapete,...oder dergleichen bestehen.

Das Plattenelement 4 kann ein ungefüllter Kunststoff, also ein Polystyrol, ein Polystyrol-Blend oder dgl. sein.

In diesem Fall können die Teilkörperhohlelemente 11.1, ..., 11.n, der Energieleiterkörper 13 und das Plattenelement 4 als Mehrschichtverbund geformt werden.

Um die isolierende Wirkung der Teilkörperhohlelemente 12.1, ... zu verstärken, schließt sich an sie, wie Fig. 1 zeigt, ein Wärmeisolierkörperelement 14 aus einem isolierenden Kunststoff mit einer Wärmeleitfähigkeit λ von möglichst < 0,1 [W/(mK)] an. Er kann insbesondere ca. 0,001 bis 1,0, vorzugsweise 0,001 bis 0,3 [W/(mK)] sein. Das Wärmeisolierkörperelement 14 wird von einem Isolierkörperelement 3 aus einem isolierenden Kunststoff mit einer Wärmeleitfähigkeit λ von ca. 0,001 bis 0,3 [W/(mK)] eingeschäumt.

Nach einer Ausführungsform der Erfindung beinhaltet das Wärmeleitkörperelement, d.λ. der Wärmeleitkörper 13, einen Kunststoff mit einer anisotropen Wärmeleitfähigkeit. Die anisotrope Wärmeleitfähigkeit hat eine Vorzugsrichtung 26, in der die Wärmeleitfähigkeit im Vergleich zu anderen Richtungen erhöht ist. Beispielsweise beinhaltet der Kunststoff des Wärmeleitkörperelements 13 einen nanoskaligen Füllstoff, insbesondere Kohlenstoff-Nanoröhrchen. Solche nanoskaligen Füllstoffe sind an sich aus dem Stand der Technik bekannt (vgl. Kunststoffe, 12/2009, "Wärme besser leiten", Carl Hanser Verlag, München).

Die Energieübertragungskörper sind bei dieser Ausführungsform so angeordnet, dass sie senkrecht zu der Vorzugsrichtung 26 des anisotrop wärmeleitfähigen Kunststoffs verlaufen. Dies hat den Vorteil, dass die Wärme in den Zwischenräumen zwischen den Energieübertragungskörpern gut geleitet wird, so dass sich der Wärmeaustausch nicht auf die Bereiche des Plattenelements 4 beschränkt, die in unmittelbarer Nähe zu einem der Energieübertragungskörper angeordnet sind, sondern auch die Bereiche zwischen den Energieübertragungskörpern mitumfasst. Hierdurch wird die Fläche des Plattenelements 4 besser genutzt, so dass sich eine größere Heiz- bzw. Kühlleistung ergibt.

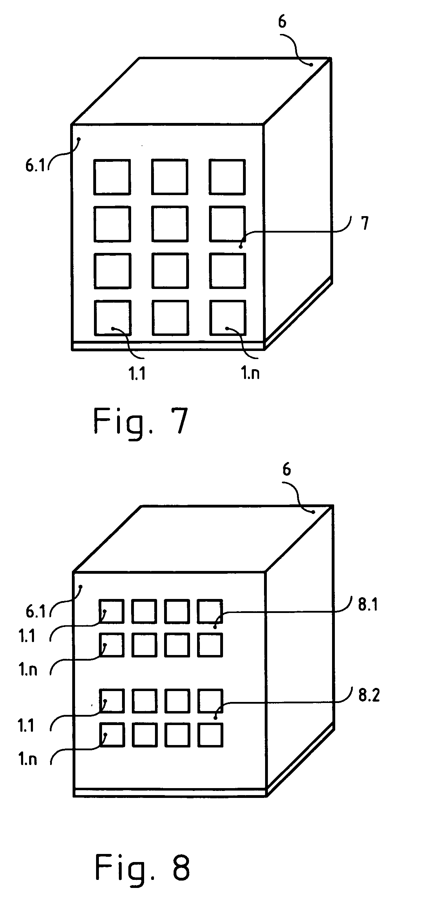

In Fig. 7 ist ein Kühlschrank 6 gezeigt, bei dem ein Kunststoffwärmeaustauscher 1.1, ..., 1.n als ein Hauptmodul 7 an einer der Wände 6.1 angebracht ist. Das Hauptmodul 7 kann mit einem Kühlkompressor oder dgl. verbunden sein.

Bei dem Kühlschrank 6 in Fig. 8. sind die Kunststoffwärmeaustauscher als Teilmodule 8.1, 8.2 an einer der Wände 6.1 angeordnet. Die Verwendung von Teilmodulen 8.1, 8.2 erlaubt eine serienmäßige Vorfertigung. Je nach Größe des Kühlschranks und des erforderlichem Kältegrads kann die Anzahl der Teilmodule frei gewählt werden.

Die Teilmodule können mit einem oder mehreren Kühlkompressoren oder dgl. verbunden werden. Hierdurch lassen sich die Fächer im Kühlschrank unterschiedlich kühlen und so dem jeweiligen Kühlgut optimal anpassen.

Mit gleichem Aufbau können sie auch so installiert werden, dass sie die Kühlung des Kühlaggregats als Wärmeübertrager, also Kühler übernehmen. An dem Wärmeleitkörper 13 werden in diesem Fall noch weitere Wärme-Leitelemente als Wärmeabgabeelemente angeordnet.

Der Kunststoffwärmeaustauscher verändert den Aufbau von Kühlschränken 6 in revolutionärer Weise. Der innere Kühlmittelverdampfer und das äußere Kühleraggregat erfahren einen vollkommen neuen Aufbau, der eine einfachere Fertigung ermöglicht und einen höheren Wirkungsgrad durch die flächenmäßige Energieübergabe von Kälte bzw. Wärme sichert.

Die einzelnen Teile der Temperierungsvorrichtung bzw. des Wärmeraustauschers können einzeln gefertigt und dann angeschweißt und/oder angeklebt durch Stoffschluß werden. Sie können aber auch ganz oder teilweise anextrudiert werden. Hierbei ist ein guter Wärmeübergang in Verbindung zu einem guten mechanischen Verhalten gewährleistet.

Der Einsatz der Kunststoffwärmeaustauscher 1.1, ..., 1.n bleibt nicht nur auf Kühlschränke beschränkt.

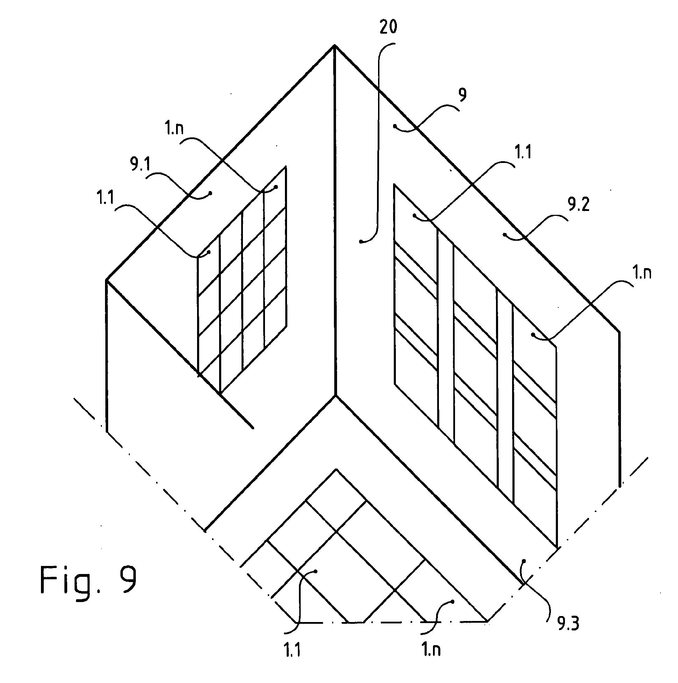

Sie sind auch, wie Fig. 9 zeigt, zur Raumklimatisierung eines Gebäudeinnenraums 20 einsetzbar. Sie werden hier in den Seitenwänden 9.1, 9.2 und/oder im Fußboden 9.3 installiert. Die Wärmeübertrager lassen sich im Estrich unter dem Fußbodenbelag einfach verlegen. Die Energieübertragungskörper 10.1, ... können eine solche Wandstärke haben, dass sie den zu erwartenden Bodenbelastungen standhalten können.

An den Wänden lassen sich die Wärmeübertrager besonders wegen ihres möglichen flachen Aufbaus unter der Wandbespannung in Form einer Tapete, einer Stoffverkleidung, einer Täfelung oder dgl. leicht installieren. Die Dicke der/s Wärmeübertrager/s und des Putzes können etwa gleich gehalten werden.

Soll der Gebäudeinnenraum 20 gekühlt werden, fließt durch die Energieübertragungskörper 10.1, ..., 10.n ein Kältemittel, ist eine Erwärmung gewünscht, ein erhitztes Fluid, z. B: heißes Wasser. Hierfür können alle und/oder Gruppen von Energieübertragungskörper 10.1, ... genutzt werden.

Der Gebäudeinnenraum 20 kann so stufenlos auf z, B: gewünschte 20 °C konstant gehalten werden. Die Kunststoffwärmeaustauscher können als Hauptmodule 7 bzw. Teilmodule 8.1, 8.2 ausgeführt werden.

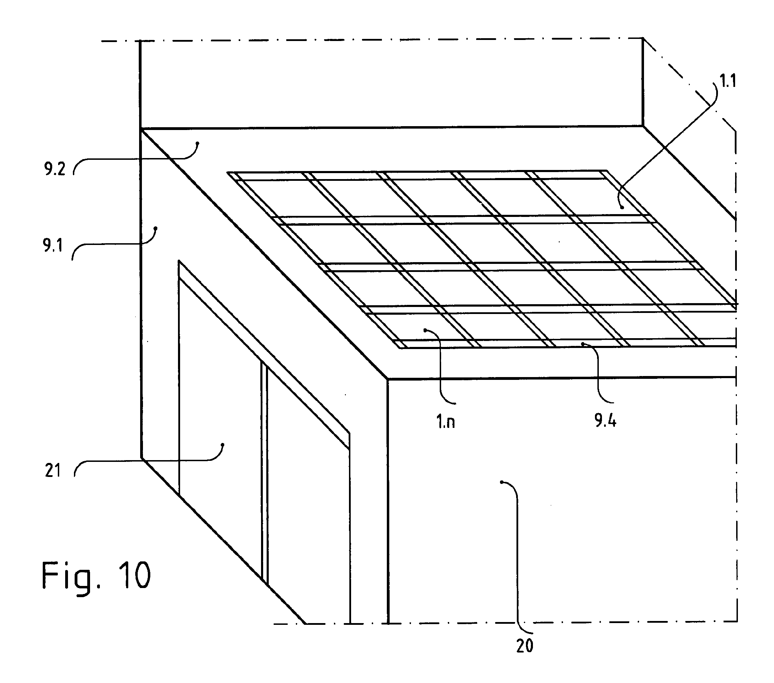

Ein weiterer Einsatzfall für Kunststoffwärmeaustauscher 1.1, ... ist eine Deckenheizung gemäß Fig. 10. Hier werden die Kunststoffwärmeaustauscher an einer Decke 9.4 des Gebäudeinnenraums 20 ähnlich wie im Boden bzw. den Wänden installiert ist. Fenster 21 schränken in diesem Fall die flächenmäßige Ausdehnung der Heizung nicht ein.

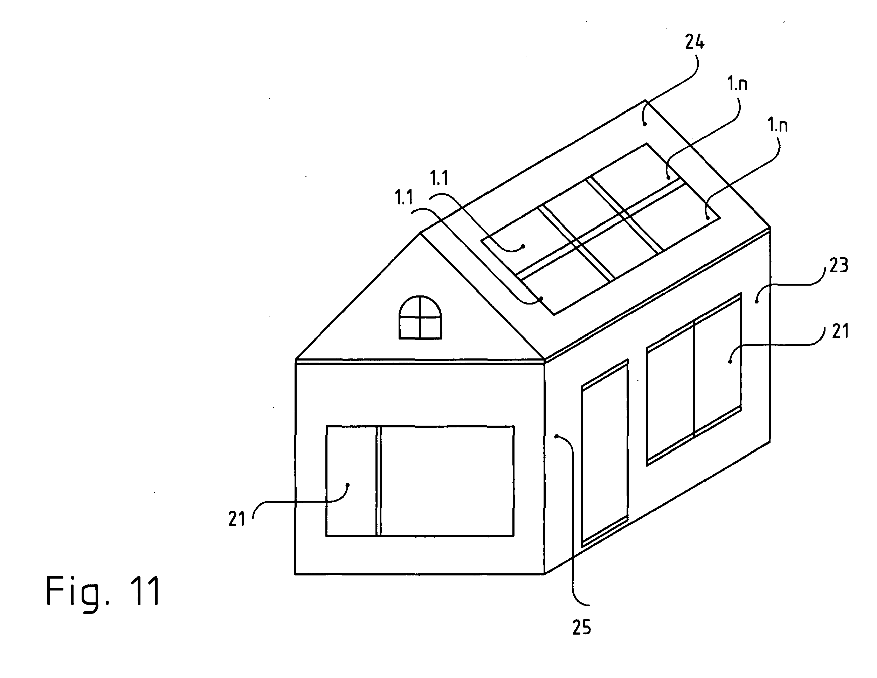

Fig. 11 zeigt den Einsatz der Kunststoffwärmeaustauscher 1.1, ..., 1.n für eine Hausversorgungsanlage 25. In diesem Fall sind die Kunststoffwärmeaustauscher als Haupt- und/oder Teilmodule 7, 8.1, 8.2 auf einem Dach 24 eines Gebäudes 23 mit den Fenstern 21 installiert. Die Kunststoffwärmeaustauscher werden nach ihrer Fertigung aufgerollt und als Rolle zur Baustelle transportiert. Dort werden sie auf das Dach gehoben, aufgerollt und entsprechend befestigt. Die Teilkörperhohlelemente 11.1, ..., 11.n und der Energieleitkörper 13 sind der Sonne zugewandt auf dem Dach installiert. Sie können mit einer dunklen, insbesondere schwarzen Deckschicht beschichtet werden.

Das in den Energieübertragungskörpern 10.1, ...10.n fließende Wasser wird von der Sonne und der Umgebungstemperatur erhitzt und steht so für einen Gebrauch als Wasch-, Badewasser oder dgl. ständig insbesondere im Sommer zur Verfügung. Hierdurch läßt sich der Gesamt- Energieverbrauch senken.

Im Winter kann durch die Energieübertragungskörper vorgewärmtes Wasser gepumpt werden. Damit wird die Oberfläche des Dachs 24 großflächig erwärmt. Fallender Schnee taut dadurch sofort und verhindert so eine Überbelastung des Dachs bzw. die gefährlichen Schneelawinen. Eine Schneebremse braucht in diesem Fall nur unterstützend angebracht werden.

Zusammenfassend kann festgestellt werden, dass die Kunststoffwärmeaustauscher
- den Aufbau von Kühlschränken und Kühltruhen vereinfachen,
- sich in Böden, Wänden und Decken leicht installieren lassen und die Räume effektiver temperieren,
- zur wirksamen Erhöhung der Energieeffizienz beitragen.

## Patentansprüche

1. Kunststoffwärmeübartrager mit einem Wärmeleitkörperelement (13) und einem Wärmeisolierkörperelement (14), wobei das Wärmeleitkörperelement eine größere Wärmeleitfähigkeit als das Wärmeisolierkörperelement aufweist, und wobei zwischen dem Wärmeleitkörperelement und dem Wärmeisolierkörperelement ein oder mehrere Energieübertragungskörper (10.1, ..., 10.n) zum Durchfluss eines Energieübertragungsmediums (2) ausgebildet sind, **dadurch gekennzeichnet dass** das Wärmeleitkörperelement einen Kunststoff mit einer anisotropen Wärmeleitfähigkeit beinhaltet, wobei die Wärmeleitfähigkeit des Kunststoffs in einer Vorzugsrichtung erhöht ist, wobei zwischen dem Wärmeleitkörperelement und dem Wärmeisolierkörperelement zumindest zwei der Energieübertragungskörper ausgebildet sind, die voneinander beabstandet sind und quer zu der Vorzugsrichtung verlaufen.

2. Kunststoffwärmeübertrager nach Anspruch 1, wobei das Wärmeleitkörperelement und das Wärmeisolierkörperelement zur Bildung einer äußeren Gehäuseform des Kunststoffwärmetauschers form- und/oder stoffschlüssig miteinander verbunden sind.

3. Kunststoffwärmeübertrager nach Anspruch 1 oder 2, wobei das Wärmeleitkörperelement und das Wärmeisolierkörperelement aus gleichen oder unterschiedlichen Kunststoffen bestehen.

4. Kunststoffwärmeübertrager nach Anspruch 1, 2 oder 3, wobei der Kunststoff des Wärmeleitkörperelements einen nanoskaligen Füllstoff, insbesondere Kohlenstoff-Nanoröhren, beinhaltet

5. Kunststoffwarmeübertrager nach Anspruch 4, wobei die Energieübertragungskörper senkrecht zu der Vorzugsrichtung angeordnet sind.

6. Kunststoffwärmeübertrager nach Anspruch 4 oder 5, wobei die Energieübertragungskörper nebeneinander unterhalb einer Frontseite des Wärmeleitkörperelements angeordnet sind.

7. Kunststoffwärmeübertrager nach Anspruch 6, wobei sich auf der Frontseite ein Plattenelement (4) aus Metall oder Kunststoff oder einem anderen Werkstoff wie Holz, Fließ, Tapete,...oder dergleichen befindet

8. Temperierungsvorrichtung, insbesondere für Kühlschränke (6) oder Gebäude (23) mit wenigstens einem Kunststoffwärmeaustauscher (1) nach einem der vorhergehenden Ansprüche
**dadurch gekennzeichnet,**
- **dass** der oder die Energieübertragungskörper (10.1....10.n) aus ersten Teilkörperhohlelementen (11.1, ..., 11.n) aus einem leitenden Kunststoff mit einer Wärmeleitfähigkeit (λ) von ca. 1,0 bis 50,0 [W/(mK)] bestehen, an denen zweite Teilkörperhohlelemente (12.1, ..., 12.n) aus einem Kunststoff mit einer Wärmeleitfähigkeit (λ) von ca. 0,001 bis 1,0 [W/(mK)] angeordnet sind,
- **dass** die ersten Teilkörperhohlelemente (11.1, ..., 11.n) von den wärmeleit Körperelement (13) aus einem weiteren leitenden Kunststoff mit einer Wärmeleitfähigkeit (A) von ca. 1,0 bis 50,0 [W/(mK)] eingefaßt sind, und
- **dass** an den zweiten Teilhohlkörperelementen (12.1, ...12.n) das Wärmeisolierkörperelement (14) aus einem isolierenden Kunststoff mit einer Wärmeleitfähigkeit (λ) von ca. 0,001 bis 1,0 [W/(mK)] angeordnet ist.

9. Vorrichtung nach Anspruch 8, **dadurch gekennzeichnet, dass** der Kunststoffwärmeaustauscher (1) modulförmig ausgebildet ist.

10. Wärmeübertrager nach einem der vorhergehenden Ansprüche 2 bis 6, insbesondere für Kühlschränke (6) oder Gebäude (23) wobei durch den oder die Energie übertragungskörper ein Energieübertragungsmedium (2) geleitet ist,
**dadurch gekennzeichnet,**
**dass** der oder die Energieübertragungskörper (10.1, ...10.n) aus ersten Teilkörperhohlelementen (11.1, ..., 11.n) aus einem leitenden Kunststoff mit einer Warmeleitfähigkeit (A) von ca. 1,0 bis 50,0 [W/(mK)] bestehen, an denen zweite Teilkörperhohlelemente (12.1, ..., 12.n) aus einem Kunststoff mit einer Wärmeleitfähigkeit (A) von ca. 0,001 bis 1,0 [W/(mK)] angeordnet sind.

11. Wärmeübertrager nach Anspruch 10, **dadurch gekennzeichnet, dass** an den zweiten Teilkörperholelementen (12.1, ...12.n) der Wärmeisolierkörperelement (14) aus einem isolierenden Kunststoff mit einer Wärmeleitfähigkeit (A) von ca. 0,001 bis 1,0 [W/(mK)] angeordnet ist.

12. Wärmeübertrager nach Anspruch 10 oder 11, **dadurch gekennzeichnet, dass** an die ersten Teilkörperhohlelemente (11.1, ..., 11.n) wenigstens teilweise das Wärmeleitkörperelement (13) aus einem weiteren leitenden Kunststoff mit einer Wärmeleitfähigkeit (λ) von ca. 1,0 bis 50,0 [W/(mK)] angeordnet ist.

13. Vorrichtung nach Anspruch 8 oder 9 oder Wärmeübertrager nach einem der Ansprüche 10 bis 12, **dadurch gekennzeichnet, dass** an dem Wärmeisolierkörperelement (14) ein Isolierkörperelement (3) aus einem weiteren isolierenden Kunststoff mit einer Wärmeleitfähigkeit (A) von ca. 0,001 bis 0,3 [W/(mK)] angeordnet ist.

14. Vorrichtung oder Wärmeübertrager nach einem der vorhergehenden Ansprüche, **dadurch gekennzeichnet, dass** die ersten Teilkörperhohlelemente (11.1, ...11.n) und der das Wärmeleitkörperelement (13) aus einem leitenden Kunststoff mit gleicher Wärmeleitfähigkeit (λ) bestehen.

15. Vorrichtung oder Wärmeübertrager nach einem der vorhergehenden Ansprüche, **dadurch gekennzeichnet, dass** auf dem Wärmeleitkörperelement (13) ein Plattenelement (4) angeordnet ist.

16. Vorrichtung oder Wärmeübertrager nach einem der vorhergehenden Ansprüche, **dadurch gekennzeichnet, dass** die ersten Teilkörperhohlelemente (11.1, ..., 11.n) im Querschnitt teilrechteckförmig ausgebildet sind.

17. Vorrichtung oder Wärmeübertrager nach einem der vorhergehenden Ansprüche, **dadurch gekennzeichnet, dass** die zweiten Teilkörperhohlelemente (12.1, ..., 12.n) im Querschnitt
- teilrechteckförmig
- teilkreisförmig,
- teilelipsoidförmig,
- dreieckförmig und/oder
- trapezförmig
ausgebildet sind.

18. Vorrichtung oder Wärmeübertrager nach Anspruch 15
**dadurch gekennzeichnet, dass** das Plattenelement (4) aus einem Kunststoff oder einem Metall besteht.

19. Vorrichtung oder Wärmeübertrager nach einem der vorhergehenden Ansprüche, **dadurch gekennzeichnet, dass** der Kunststoff ein thermoplastischer Kunststoff, insbesondere Polystyrol, ein Polystyrol-Blend, ein Polyolefin, ein Polyester, ein Polyamid oder ein bioabbaubarer Kunststoff ist.

20. Vorrichtung nach Anspruch 13 , **dadurch gekennzeichnet, dass** der isolierende Kunststoff ein mit Luft, CO2 oder dgl. Gas geschäumter Kunststoff ist.

21. Vorrichtung oder Wärmeübertrager nach einem der vorhergehenden Ansprüche 8 oder 12, **dadurch gekennzeichnet, dass** der leitende und der weitere leitende Kunststoff ein mit Metall-Pulver, Keramik-Pulver, Graphit, Aluminiumoxyd, Bornitrid, Metallfasern und/oder Nanostoffen gefüllter Kunststoff ist.

22. Vorrichtung oder Wärmeübertrager nach Anspruch 21 **dadurch gekennzeichnet, dass** Metall-Pulver ein Aluminium oder KupferPulver ist.

23. Vorrichtung oder Wärmeübertrager nach Ansprüche 21 oder 22 **dadurch gekennzeichnet, dass** das Keramik-Pulver ein BN-, AL2O3-, Silkat- oder ein anderes organisches Pulver ist.

24. Verfahren zur Herstellung eines Wärmeaustauschers nach einem der vorhergehenden Ansprüche, insbesondere für Kühlschränke (6) oder Gebäude (23) mit wenigstens einem Energieübertragungskörper (10.1, ..., 10.n), durch die ein Energieübertragungsmedium (2) geleitet wird, **gekennzeichnet durch** eine Verwendung eines Kunststoffverbunds derart,
dass die Energieübertragungskörper (10.1, ..., 10.n) mit ersten Teilkörperhohlelementen (11.1, ..., 11.n) aus einem leitenden Kunststoff mit einer Wärmeleitfähigkeit (A) von ca. 1,0 bis 50,0 [W/(mK)] geformt werden, an die zweite Teilkörperhohlelemente (12.1, ..., 12.n) aus einem Kunststoff mit einer Wärmeleitfähigkeit (λ) von ca. 0,001 bis 1,0 [W/(mK)] geformt werden.

25. Verfahren nach Anspruch 24, **dadurch gekennzeichnet, dass** an die ersten Teilkörperhohlelemente (11.1, ..., 11.n) ein Wärmeleitkörperelement (13) aus einem weiteren leitenden Kunststoff mit einer Wärmeleitfähigkeit (A) von ca. 1,0 bis 50,0 [W/(mK)] angeformt wird.

26. Verfahren nach Anspruch 24 oder 25, **dadurch gekennzeichnet, dass** die ersten Teilkörperhohlelemente (11.1, ..., 11.n) und das Wärmeleitkörper element (13) aus einem leitenden Kunststoff mit einer Wärmeleitfähigkeit (A) geformt werden.

27. Verfahren nach einem der Ansprüche 24 bis 26, **dadurch gekennzeichnet, dass** die ersten Teilkörperhohlelemente (11.1, ..., 11.n), das Wärmeleitkörperelement (13) und ein Plattenelement (4) als Mehrschichtverbund geformt werden.

## Claims

1. A plastic heat exchanger with a heat-conducting body element (13) and a heat-insulating body element (14), wherein the heat-conducting body element has a greater heat conductivity than the heat-insulating element, and wherein one or more energy transmission bodies (10.1, ..., 10.n) for the passage of an energy transmission medium (2) are formed between the heat-Conducting body element and the heat-insulating body element, **characterised in that** the heat-conducting body element comprises a plastic with an anisotropic heat conductivity, wherein the heat conductivity of the plastic is increased in a preferred direction, wherein at least two of the energy transmission bodies, which are spaced from one another and run transverse to the preferred direction, are formed between the heat-conducting body element and the heat-insulating body element.

2. The plastic heat exchanger according to Claim 1, wherein the heat-conducting body element and the heat-insulating body element are interconnected with an interlocking fit and/or in an integrally bonded manner to form an outer housing shape of the plastic heat exchanger.

3. The plastic heat exchanger according to Claim 1 or 2, wherein the heat-conducting element and the heat-insulating element consist of the same or different plastics.

4. The plastic heat exchanger according to Claim 1, 2 or 3, wherein the plastic of the heat-conducting body element comprises a nanoscale filler, in particular carbon nanotubes.

5. The plastic heat exchanger according to Claim 4, wherein the energy transmission bodies are arranged perpendicular to the preferred direction.

6. The plastic heat exchanger according to Claim 4 or 5, wherein the energy transmission bodies are arranged side-by-side beneath a front side of the heat-conducting body element.

7. The plastic heat exchanger according to Claim 6, wherein a plate element (4) made of metal or plastic or another material, such as wood, fleece, wallpaper, or the like is located on the front side.

8. A temperature-control device, in particular for refrigerators (6) or buildings (23), comprising at least one plastic heat exchanger (1) according to one of the preceding claims,
**characterised in that**
- the energy transmission body or bodies (10.1, ..., 10.n) consist of first partial-body hollow elements (11.1, ..., 11.n) made of a conductive plastic having a heat conductivity (λ) of approximately 1.0 to 50.0 [W/(mK)], on which second partial-body hollow elements (12.1, ..., 12.n) made of a plastic having a heat conductivity (λ) of approximately 0.001 to 1.0 [W/(mK)] are arranged,
- **in that** the first partial-body hollow elements (11.1, ..., 11.n) are enclosed by the heat-conducting body element (13) made of a further conductive plastic having a heat conductivity (λ) of approximately 1.0 to 50.0 [W/(mK)], and
- **in that** the heat-insulating body element (14) made of an insulating plastic having a heat conductivity (λ) of approximately 0.001 to 1.0 [W/(mK)] is arranged on the second partial hollow body elements (12.1, ..., 12.n).

9. The device according to Claim 8, **characterised in that** the plastic heat exchanger (1) is of modular design.

10. The heat exchanger according to one of the preceding claims 2 to 6, in particular for refrigerators (6) or buildings (23), wherein an energy transmission medium (2) is conducted through the energy transmission body or bodies, **characterised in that**
the energy transmission body or bodies (10.1, ..., 10.n) consist of first partial-body hollow elements (11.1, ..., 11.n) made of a conductive plastic having a heat conductivity (λ) of approximately 1.0 to 50.0 [W/(mK)], on which second partial-body hollow elements (12.1, ..., 12.n) made of a plastic having a heat conductivity (λ) of approximately 0.001 to 1.0 [W/(mK)] are arranged.

11. The heat exchanger according to Claim 10, **characterised in that** the heat-insulating body element (14) made of an insulating plastic having a heat conductivity (λ) of approximately 0.001 to 1.0 [W/(mK)] is arranged on the second partial-body hollow elements (12.1, ..., 12.n).

12. The heat exchanger according to Claim 10 or 11, **characterised in that** the heat-conducting element (13) made of a further conductive plastic having a heat-conductivity (λ) of approximately 1.0 to 50.0 [W/(mK)] is arranged, at least in part, on the first partial-body hollow elements (11.1, ..., 11.n).

13. The device according to Claim 8 or 9 or the heat exchanger according to one of Claims 10 to 12, **characterised in that** an insulating body element (3) made of a further insulating plastic having a heat conductivity (λ) of approximately 0.001 to 0.3 [W/(mK)] is arranged on the heat-insulating body element (14).

14. The device or heat exchanger according to one of the preceding claims, **characterised in that** the first partial-body hollow elements (11.1, ..., 11.n) and the heat-conducting body element (13) consist of a conductive plastic of identical heat conductivity (λ).

15. The device or heat exchanger according to one of the preceding claims, **characterised in that** a plate element (4) is arranged on the heat-conducting body element (13).

16. The device or heat exchanger according to one of the preceding claims, **characterised in that** the first partial-body hollow elements (11.1, ..., 11.n) are partially rectangular in cross section.

17. The device or heat exchanger according to one of the preceding claims, **characterised in that** the second partial-body hollow elements (12.1, ..., 12.n) are
- partially rectangular,
- partially circular,
- partially ellipsoidal,
- triangular, and/or
- trapezoidal
in cross section.

18. The device or heat exchanger according to Claim 15, **characterised in that** the plate element (4) consists of a plastic or a metal.

19. The device or heat exchanger according to one of the preceding claims, **characterised in that** the plastic is a thermoplastic, in particular polystyrene, a polystyrene blend, a polyolefin, a polyester, a polyamide, or a biodegradable plastic.

20. The device according to Claim 13, **characterised in that** the insulating plastic is a plastic foamed with air, CO2, or the like.

21. The device or heat exchanger according to one of the preceding claims 8 or 12, **characterised in that** the conductive plastic and the further conductive plastic is a plastic filled with metal powder, ceramic powder, graphite, aluminium oxide, boron nitride, metal fibres, and/or nanomaterials.

22. The device or heat exchanger according to Claim 21, **characterised in that** the metal powder is an aluminium powder or copper powder.

23. The device or heat exchanger according to Claims 21 or 22, **characterised in that** the ceramic powder is a BN powder, AL203 powder, silicate powder, or another organic powder.

24. A method for producing a heat exchanger according to one of the preceding claims, in particular for refrigerators (6) or buildings (23), comprising at least one energy transmission body (10.1, ..., 10.n), through which an energy transmission medium (2) is conducted, **characterised by** use of a plastic composite in such a way that the energy transmission bodies (10.1, ..., 10.n) are formed with first partial-body hollow elements (11.1, ..., 11.n) made of a conductive plastic having a heat conductivity (λ) of approximately 1.0 to 50.0 [W/(mK)], on which second partial-body hollow elements (12.1, ..., 12.n) made of a plastic having a heat conductivity (λ) of approximately 0.001 to 1.0 [W/(mK)] are formed.

25. The method according to Claim 24, **characterised in that** a heat-conducting body element (13) made of a further conductive plastic having a heat conductivity (λ) of approximately 1.0 to 50.0 [W/(mK)] is integrally formed on the first partial-body hollow elements (11.1, ..., 11.n).

26. The method according to Claim 24 or 25, **characterised in that** the first partial-body hollow elements (11.1, ..., 11.n) and the heat-conducting body element (13) are formed from a conductive plastic having a heat conductivity (λ).

27. The method according to one of Claims 24 to 26, **characterised in that** the first partial-body hollow elements (11.1, ..., 11.n), the heat-conductive body element (13), and a plate element (4) are formed as a multi-layered composite.

## Revendications

1. Échangeur de chaleur en plastique avec un élément de corps thermo-conducteur (13) et un élément de corps d'isolation thermique (14), dans lequel l'élément de corps thermoconducteur offre une plus grande conductibilité thermique que l'élément de corps d'isolation thermique, et dans lequel un ou plusieurs corps de transfert d'énergie (10.1, ..., 10.n) sont formés entre l'élément de corps thermo-conducteur et l'élément de corps d'isolation thermique, pour le passage d'un fluide de transfert d'énergie (2), **caractérisé en ce que** l'élément de corps thermo-conducteur contient une matière plastique avec une conductibilité thermique anisotrope, dans lequel la conductibilité thermique de la matière plastique est augmentée dans une direction préférentielle, dans lequel au moins deux des corps de transfert d'énergie, espacés l'un de l'autre et s'étendant transversalement à la direction préférentielle, sont formés entre l'élément de corps thermo-conducteur et l'élément de corps d'isolation thermique.

2. Échangeur de chaleur en plastique selon la revendication 1, dans lequel l'élément de corps thermo-conducteur et l'élément de corps d'isolation thermique sont reliés entre eux par complémentarité de forme et/ou par liaison de matière, pour former un boîtier extérieur de l'échangeur de chaleur en plastique.

3. Échangeur de chaleur en plastique selon la revendication 1 ou 2, dans lequel l'élément de corps thermo-conducteur et l'élément de corps d'isolation thermique sont constitués de matériaux identiques ou différents.

4. Échangeur de chaleur en plastique selon la revendication 1, 2 ou 3, dans lequel la matière plastique de l'élément de corps thermo-conducteur contient une matière de charge nanométrique, en particulier des nanotubes au carbone.

5. Échangeur de chaleur en plastique selon la revendication 4, dans lequel les corps de transfert d'énergie sont agencés perpendiculairement à la direction préférentielle.

6. Échangeur de chaleur en plastique selon la revendication 4 ou 5, dans lequel les corps de transfert d'énergie sont agencés côte à côte, sous un côté frontal de l'élément de corps thermo-conducteur.

7. Échangeur de chaleur en plastique selon la revendication 6, dans lequel un élément en plaque (4) constitué de métal ou de plastique ou d'un autre matériau tel que le bois, le non-tissé, la tapisserie ou autres, est prévu du côté frontal.

8. Dispositif de mise en température, en particulier pour des réfrigérateurs (6) ou des bâtiments (23), avec au moins un échangeur de chaleur en plastique (1) selon l'une des revendications précédentes,
**caractérisé en ce que**
- le ou les corps de transfert d'énergie (10.1, ..., 10.n) est/sont constitué(s) de premiers éléments creux de corps partiel (11.1, ..., 11.n) réalisés à partir d'une matière plastique conductrice, avec une conductibilité thermique (λ) d'environ 1,0 à 50,0 [W/(mK)], sur lesquels sont agencés des deuxièmes éléments creux de corps partiel (12.1, ..., 12.n) constitués d'une matière plastique avec une conductibilité thermique (λ) d'environ 0,001 à 1,0 [W/(mK)],
- les premiers éléments creux de corps partiel (11.1, ..., 11.n) sont bordés par l'élément de corps thermo-conducteur (13) constitué d'une autre matière plastique conductrice avec une conductibilité thermique (λ) d'environ 1,0 à 50,0 [W/(mK)], et
- l'élément de corps d'isolation thermique (14) constitué d'une matière plastique isolante avec une conductibilité thermique (λ) d'environ 0,001 à 1,0 [W/(mK)] est agencé sur les deuxièmes éléments creux de corps partiel (12.1, ..., 12.n).

9. Dispositif selon la revendication 8, **caractérisé en ce que** l'échangeur de chaleur en plastique (1) est conçu sous forme de module.

10. Échangeur de chaleur selon l'une des revendications précédentes 2 à 6, en particulier pour des réfrigérateurs (6) ou des bâtiments (23), dans lequel un fluide de transfert d'énergie (2) est guidé à travers le ou les corps de transfert d'énergie,
**caractérisé en ce que**
- le ou les corps de transfert d'énergie (10.1, ..., 10.n) est/sont constitué(s) de premiers éléments creux de corps partiel (11.1, ..., 11.n) réalisés à partir d'une matière plastique conductrice avec une conductibilité thermique (A) d'environ 1,0 à 50,0 [W/(mK)], sur lesquels sont agencés des deuxièmes éléments creux de corps partiel (12.1, ..., 12.n) constitués d'une matière plastique avec une conductibilité thermique (λ) d'environ 0,001 à 1,0 [W/(mK)].

11. Échangeur de chaleur selon la revendication 10, **caractérisé en ce que** l'élément de corps d'isolation thermique (14) constitué d'une matière plastique isolante avec une conductibilité thermique (λ) d'environ 0,001 à 1,0 [W/(mK)] est agencé sur les deuxièmes éléments creux de corps partiel (12.1, ..., 12.n).

12. Échangeur de chaleur selon la revendication 10 ou 11, **caractérisé en ce que** l'élément de corps thermo-conducteur (13) constitué d'une autre matière plastique avec une conductibilité thermique (λ) d'environ 1,0 à 50,0 [W/(mK)] est agencé au moins partiellement sur les premiers éléments creux de corps partiel (11.1, ..., 11.n).

13. Dispositif selon la revendication 8 ou 9, ou échangeur de chaleur selon l'une des revendications 10 à 12, **caractérisé en ce qu'**un élément de corps isolant (3) constitué d'une autre matière plastique isolante avec conductibilité thermique (λ) d'environ 0,0001 à 0,3 [W/(mK)] est agencé sur l'élément de corps d'isolation thermique (14).

14. Dispositif ou échangeur de chaleur selon l'une des revendications précédentes, **caractérisé en ce que** les premiers éléments creux de corps partiel (11.1, ..., 11.n) et l'élément de corps thermo-conducteur (13) sont constitués d'une matière plastique conductrice avec une même conductibilité thermique (λ).

15. Dispositif ou échangeur de chaleur selon l'une des revendications précédentes, **caractérisé en ce qu'**un élément en plaque (4) est agencé sur l'élément de corps thermo-conducteur (13).

16. Dispositif ou échangeur de chaleur selon l'une des revendications précédentes, **caractérisé en ce que** les premiers éléments creux de corps partiel (11.1, ..., 11.n) sont conçus avec une section transversale partiellement rectangulaire.

17. Dispositif ou échangeur de chaleur selon l'une des revendications précédentes, **caractérisé en ce que** les deuxièmes éléments creux de corps partiel (12.1, ..., 12.n) présentent une section transversale
- partiellement rectangulaire
- partiellement circulaire
- partiellement ellipsoïde
- partiellement triangulaire et/ou
- trapézoïdale.

18. Dispositif ou échangeur de chaleur selon la revendication 15, **caractérisé en ce que** l'élément en plaque (4) est constitué d'une matière plastique ou d'un métal.

19. Dispositif ou échangeur de chaleur selon l'une des revendications précédentes, **caractérisé en ce que** la matière plastique est une matière thermoplastique, en particulier du polystyrène, un mélange de polystyrène, une polyoléfine, un polyester, un polyamide ou un plastique biodégradable.

20. Dispositif selon la revendication 13, **caractérisé en ce que** la matière plastique isolante est une matière plastique expansée avec de l'air, du CO2 ou un autre gaz similaire.

21. Dispositif ou échangeur de chaleur selon l'une des revendications précédentes, **caractérisé en ce que** la matière plastique conductrice ou l'autre matière plastique conductrice est une matière plastique chargée d'une poudre métallique, d'une poudre céramique, de graphite, d'oxyde d'aluminium, de nitrure de bore, de fibres métalliques et/ou de substances nanométriques.

22. Dispositif ou échangeur de chaleur selon la revendication 21, **caractérisé en ce que** la poudre métallique est une poudre d'aluminium ou une poudre de cuivre.

23. Dispositif ou échangeur de chaleur selon la revendication 21 ou 22, **caractérisé en ce que** la poudre céramique est une poudre de BN, d'AL2O3, de silicate ou une autre poudre organique.

24. Procédé pour la fabrication d'un échangeur de chaleur selon l'une des revendications précédentes, en particulier pour des réfrigérateurs (6) ou des bâtiments (23), avec au moins un corps de transfert d'énergie (10.1, ..., 10.n) à travers lequel est guidé un fluide de transfert d'énergie (2), **caractérisé par** l'utilisation d'un mélange de matière plastique, de sorte que
- les corps de transfert d'énergie (10.1, ..., 10.n) sont formés avec des premiers éléments creux de corps partiel (11.1, ..., 11.n) constitués d'une matière plastique conductrice avec une conductibilité thermique (λ) d'environ 1,0 à 50,0 [W/(mK)], sur lesquels sont formés des deuxièmes éléments creux de corps partiel (12.1, ..., 12.n) constitués d'une matière plastique avec une conductibilité thermique (λ) d'environ 0,001 à 1,0 [W/(mK)].

25. Procédé selon la revendication 24, **caractérisé en ce qu'**un élément de corps thermo-conducteur (13) constitué d'une autre matière plastique conductrice avec une conductibilité thermique (λ) d'environ 1,0 à 50,0 [W/(mK)] est formé sur les premiers éléments creux de corps partiel (11.1, ..., 11.n).

26. Procédé selon la revendication 24 ou 25, **caractérisé en ce que** les premiers éléments creux de corps partiel (11.1, ..., 11.n) et l'élément de corps thermo-conducteur (13) sont constitués d'une matière plastique conductrice avec une même conductibilité thermique (λ).

27. Procédé selon l'une des revendications 24 à 26, **caractérisé en ce que** les premiers éléments creux de corps partiel (11.1, ..., 11.n), l'élément de corps thermo-conducteur (13) et un élément en plaque (4) sont conçus comme un composite multicouche.
